Europäisches Patentamt

European Patent Office

Office européen des brevets

(19)

(11) Publication number:

**0 323 206**
**A1**

## (12) EUROPEAN PATENT APPLICATION

(21) Application number: **88312337.4**

(22) Date of filing: **28.12.88**

(51) Int. Cl.⁴: **B 01 D 53/34**

(30) Priority: **30.12.87 US 139676**

(43) Date of publication of application:
**05.07.89 Bulletin 89/27**

(84) Designated Contracting States: **DE FR GB SE**

(71) Applicant: **SOLARCHEM ENTERPRISES INC.**
**40 West Wilmot Street, Unit 5**
**Richmond Hill Ontario L4B 1H8 (CA)**

(72) Inventor: **Stevens, Samuel R.D.**
**82 Charnwood Place**
**Thornhill, Ontario, L3T 5H3 (CA)**

**Brown, Pauline Macura**
**201 Donlea Drive**
**Toronto, Ontario, M4G 2N1 (CA)**

**Tremblay, Linda S.**
**274 Labrador Drive**
**Oshawa, Ontario, L1H 7E8 (CA)**

(74) Representative: **Paget, Hugh Charles Edward et al**
**MEWBURN ELLIS & CO. 2/3 Cursitor Street**
**London EC4A 1BQ (GB)**

(54) **Process for the removal of mercury from a gas stream.**

(57) A method of removing mercury vapour from a gas stream includes irradiating the gas stream with radiation from a source having a substantial portion of its emission at about 254 nm, in the presence of one or both of hydrochloric acid or oxygen to form a particulate mercury, and removing the particulate mercury from the gas stream.

EP 0 323 206 A1

## Description

# PROCESS FOR THE REMOVAL OF MERCURY FROM A GAS STREAM

This invention relates to a process for the removal of mercury vapour from an industrial exhaust gas stream.

Mercury vapour frequently contaminates the exhaust gas streams from incinerators, coal fired power plants and waste heat recovery systems. Since mercury is toxic, there is a need for the removal of the mercury from these industrial exhaust gas streams. Formerly, either the mercury was allowed to escape into the atmosphere or scrubbers were used to remove some of the mercury.

Such scrubbers are inefficient at removing mercury in low concentrations. There is, therefore, a need for a process for the efficient removal of mercury, even in small concentrations, from an industrial exhaust gas stream.

There is provided a method of removing mercury vapour from a gas stream, comprising irradiating the gas stream with radiation from a source having a substantial portion of its emission at about 254 nm, preferably from 253 nm to 254.5 nm in the presence of one or both of hydrochloric acid and oxygen to form particulate mercury, and removing the particulate mercury from the air stream.

The radiation source is most preferably a low pressure mercury vapour lamp, which has distinct emission lines at 184.9 nm and at 253.7 nm.

## BRIEF DESCRIPTION OF THE FIGURES

The principle of operation of the process will now be described by way of example with reference to the figures in which:

Figure 1 is a graph showing mercury removal at varying mercury concentrations in an air stream, after irradiation in the presence of both hydrochloric acid and oxygen;

Figures 2 is a graph showing mercury removal at varying concentrations of mercury in an air stream, after irradiation in the presence of oxygen, without hydrochloric acid; and

Figure 3 is a schematic flowsheet of the apparatus used in the Examples to follow to show the operability of the process of the invention.

## DESCRIPTION OF THE PREFERRED EMBODIMENTS AND PRINCIPLE OF OPERATION

According to the process of this invention, mercury vapour, particularly in an industrial exhaust stream, may be removed from the gas stream by precipitating the mercury out as a particulate and filtering the particulate from the air stream.

To precipitate the mercury vapour out from the gas stream, the mercury vapour is irradiated with radiation from a source having a substantial portion of its emission at about 254 nm, in the presence of one or both of hydrochloric acid and oxygen. Irradiation excites the mercury atoms according to the following equations:

$$Hg + h\nu \xrightarrow{253.7 \text{ nm}} Hg(^3P) \qquad (1)$$

$$Hg + h\nu \xrightarrow{184.9 \text{ nm}} Hg(^1P) \qquad (2)$$

Once the mercury atoms are in an excited state, they may react with any hydrochloric acid or molecular oxygen in the gas stream, according to the following equations:

$$2 HG(^3P) + 2HCL \rightarrow Hg_2Cl_2 + 2H \qquad (3)$$

$$Hg (^3P) + O_2 \rightarrow HgO + O \qquad (4)$$

$Hg_2Cl_2$ is particulate calomel, and HgO is mercury oxide which also precipitates from the gas stream.

Mercury vapour in industrial exhaust gas streams presents mercury in its elemental, ground state. It is possible for some mercury to be present in a gas stream as organic mercury. Organic mercury will also be inherently removed to some extent by the process of the invention, since radiation in the presence of hydrochloric acid and oxygen can release the mercury as ionic mercury. However, organic mercury is not the target compound for removal, and the process is therefore optimized for the removal of elemental mercury vapour.

The radiation source most preferably used in the process is a low pressure mercury vapour lamp. Such lamps have distinct emission lines or output at 184.9 nm and at 253.7 nm. The latter line, at about 254 nm, is necessary in order to produce the excited state of mercury ($Hg(^3P)$), for reaction with HCl or $O_2$ in accordance with reactions (3) and (4) above.

While high or medium pressure mercury vapour lamps have a broad output spectrum around 254 nm, they are not suitable since the mercury used within these lamps reabsorbs the light given off at the 254 nm line. A low pressure mercury vapour lamp usually has about four times more light available at about 254 nm than at about 185 nm. In accordance with equations (1) and (2) above, both these lines produce excited states of the mercury atom, however, at about 185 nm, other substances typically present in an industrial exhaust gas, such as H2O and O2, absorb significantly, thus competing for the energy at 185 nm. Accordingly, it is most preferable to operate the process with a radiation source, such as a low pressure mercury vapour lamp, which has a substantial portion of its emission at about 254 nm.

Typical gas streams from industrial incinerators contain about 0.1 mg/m³ mercury and about 100 mg/m³ hydrochloric acid (70 ppm), along with substantial amounts of molecular oxygen. A major advantage of this process is apparent, since the reactants HCl and O2 in equations (3) and (4) above, are often already present in greater than stoichiometric amounts for reaction with the mercury atoms to form particulate mercury. If insufficient amounts of HCl are present, HCl can be added to the gas stream, either in advance of or during the irradiation step. Molecular oxygen will almost always be present in greater than stoichiometric amounts, making its addition unnecessary.

In practice, an industrial exhaust gas stream is confined to a duct, which can easily be adapted for mercury removal in accordance with the process of the invention. The radiation source may be placed outside the duct and the radiation directed through a quartz window in the duct, or the source may be placed inside the duct for more direct contact with the gas stream.

The reaction rates of the above reactions (1) to (4) are all sufficiently fast that the length of the reaction zones has not been found to be critical. The reactions occur within a very short distance of the radiation source. If mercury removal efficiencies are found to be low, the removal efficiency can be improved by placing one or more additional radiation sources along the length of the duct and/or by increasing the intensity of the radiation.

The particulate mercury produced in this process, namely particulate calomel and mercury oxide, can be removed by any of the known techniques for removing solid particulate material from gas streams. Exemplary techniques are fabric filters and bag houses.

To demonstrate the operability of the process of this invention, the following non-limiting example is included.

### EXAMPLE

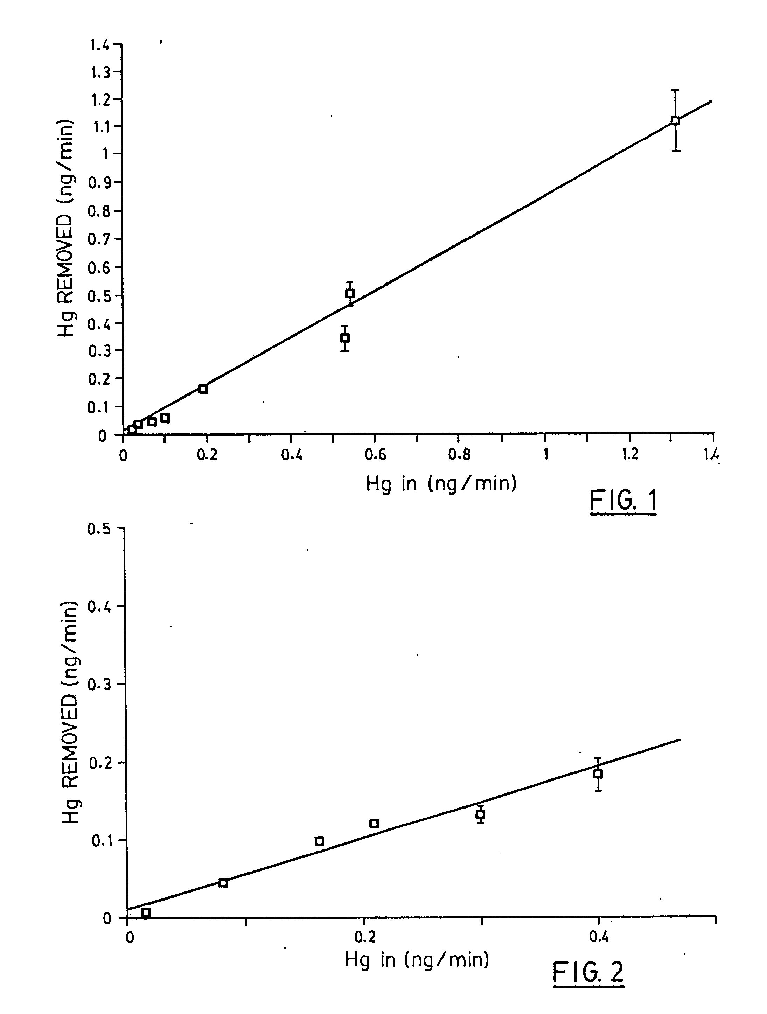

The removal rate of elemental mercury from an air stream when both hydrochloric acid and oxygen are present was found to be approximately twice as great as the removal rate of elemental mercury from an air stream when oxygen was present without hydrochloric acid. This is illustrated in Figures 1 and 2, as explained hereinbelow.

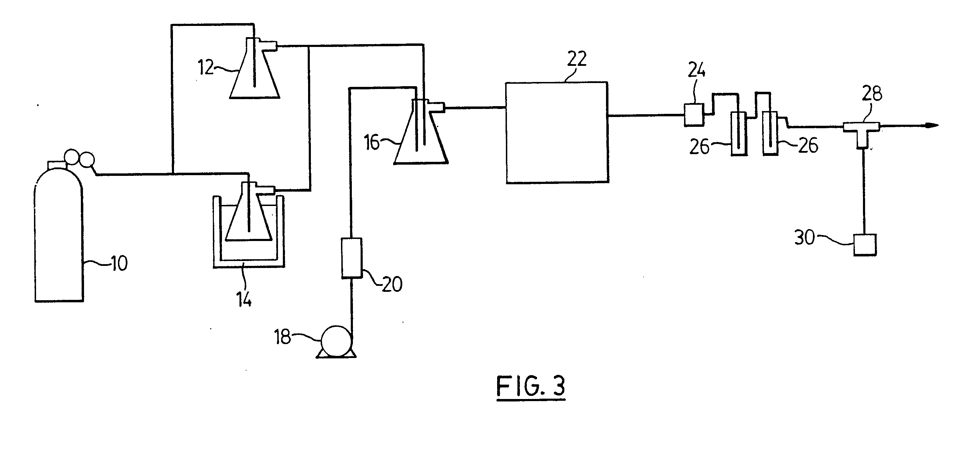

The laboratory apparatus used to compile the data in Figures 1 and 2 is shown in Figure 3. An air cylinder 10 provided a carrier gas stream for the elemental mercury vapour and the hydrochloric acid. The carrier gas stream was divided and passed through a flask 12 containing hydrochloric acid and a flask 14 containing mercury. Flask 14 was immersed in an ice bath 15. The carrier gas stream, containing hydrochloric acid and mercury (and inherently containing molecular oxygen) was mixed in a mixing flask 16, where it was diluted with air from a pump 18 through a flowmeter 20. This dilution technique allowed for varying mercury input rates or concentrations. The gas stream containing hydrochloric acid and mercury was then passed into a ultraviolet reactor 22 where it was subjected to ultraviolet radiation. The ultraviolet reactor 22 was a quartz flow cell with a low pressure 90W mercury vapour lamp. The irradiated gas stream was then passed through a filter cassette 24, containing a mixed cellulose ester filter (pore size 0.8 μm), which collected particulate $Hg_2Cl_2$ and HgO, and through impingers 26 which absorbed excess hydrochloric acid. The gas stream was then sampled through a sampling "T" 28 and mercury analyzer 30.

Figures 1 and 2 show the amount of mercury removed from the gas stream as a function of amount of mercury entering the system. Thus the slopes of the graphs are an expression of removal rate of mercury. The data in Figure 1 was compiled with a gas stream containing both molecular oxygen and hydrochloric acid. Figure 2 shows mercury removal when the gas stream did not contain hydrochloric acid.

In Figure 1 the slope was 0.847 showing that at mercury input rates in the order of 0.5 ng/min, equivalent to mercury concentrations of 0.1 mg/m³, close to 83% of the mercury was removed by the process of the invention when irradiation is conducted in the presence of both molecular oxygen and hydrochloric acid. Figure 2 produced a slope of 0.434, showing that for mercury input rates in the order of 0.34 ng/min, equivalent to 0.07 mg/m³, close to 43% of the mercury was removed when molecular oxygen but no hydrochloric acid was present.

### Claims

1. A method of removing mercury from an gas stream containing mercury vapour, comprising: irradiating the gas stream with radiation from a source having a substantial portion of its emission at about 254 nm, in the presence of one or both of hydrochloric acid and oxygen, to form particulate mercury, and removing the particulate mercury from the gas stream.

2. The process as set forth in claim 1, wherein the radiation source has distinct emission lines at 184.9 nm and at 253.7 nm.

3. The process as set forth in claim 1, wherein the radiation source is a low pressure mercury vapour lamp.

4. The process as set forth in claim 1, wherein the gas stream is an industrial gas stream containing mercury vapour, hydrochloric acid and oxygen.

5. The process as set forth in claim 3, wherein the gas stream is an industrial gas stream containing mercury vapour, hydrochloric acid and oxygen.

6. The process as set forth in claim 4, wherein the particulate mercury formed is one or both of particulate calomel and mercury oxide.

7. The process as set forth in claim 5, wherein the particulate mercury formed is one or both of particulate calomel and mercury oxide.

FIG. 1

FIG. 2

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | DE-A-2 437 110 (C.F. SPIESS & SOHN) <br> * claims 1, 2, 5 * <br> --- | 1,3 | B 01 D 53/34 |
| A | EP-A-0 208 036 (TOKYO METROPOLITAN ENVIRONMENTAL SERVICE CORP.) <br> * claims 1, 4 * <br> ----- | 1 | |

TECHNICAL FIELDS SEARCHED (Int. Cl.4)

B 01 D 53/00

The present search report has been drawn up for all claims

| Place of search | Date of completion of the search | Examiner |
|---|---|---|
| BERLIN | 26-02-1989 | BERTRAM H E H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P0401)